# EUROPEAN PATENT APPLICATION

(11) **EP 1 432 182 A1**
(43) Date of publication of application: **23.06.2004**
(21) Application number: 03104641.0
(22) Date of filing: 11.12.2003
(51) Int. Cl.: H04L 12/56, H04L 29/06

(54) **Method for sending messages in a computer network**

(30) Priority: 12.12.2002 EP 02102738
(71) Applicant: AGFA-GEVAERT, 2640 Mortsel (BE)
(72) Inventor: Tuijn, Chris, 2640, Mortsel (BE); De Mangelaere, Peter, 2640, Mortsel (BE)

(57) **Abstract**

A method for maintaining a topology information of a topology of a system (10) including a computer network (15), a first computer (21) and a second computer (31) connected to the first computer (21) via the computer network (15), the method including (a) sending, to a bootstrap router for maintaining the topology information and running on the first computer (21), a first message indicating a modification of the topology of the system (10); (b) receiving the first message by the bootstrap router; (c) updating the topology information maintained by the bootstrap router; (d) sending by the bootstrap router a second message indicating the updated topology information to a router running on the second computer (31).

## Description

### FIELD OF THE INVENTION

The present invention relates to a system and a method for establishing communications between a server computer and a client computer via a network such as the Internet.

### BACKGROUND OF THE INVENTION

In the printing and publishing environment, different players interact in order to obtain print and publishing products, such as magazines, catalogues, promotional, corporate, book or specialty products in offset, flexo, screen, digital, sheet- or web-fed printing. The main players that interact, in what is called in this document the "Graphic Enterprise", are the print buyer (or customer), the people in the workcenter, and the customer service representative who is the communicator between the first two main players. Different tools are used within the Graphic Enterprise, such as mail servers, pre-press workflow systems (such as Apogee Series 3 and Apogee X from Agfa), cost estimation modules, Management Information Systems (MIS), Job Definition Format (JDF) devices, etc. However, the communication between these tools and between the different players in the Graphic Enterprise is often unstructured.

There is thus a need for improved communication between the different players and the tools within the Graphic Enterprise.

### SUMMARY OF THE INVENTION

The present invention is a method for maintaining a topology information of a topology of a computer network system as claimed in independent claim 1. Preferably, a method in accordance with the invention is implemented by a set of computer programs as claimed in claim 8. The invention also includes a method for maintaining a topology information by a server computer as claimed in independent claim 10, a method for maintaining a topology information by a client computer as claimed in independent claim 12 and the corresponding computer programs. The invention further includes data processing systems (such as a computer network system, a server computer or a client computer) comprising means for carrying out these methods and computer readable media comprising program code adapted to perform these methods. Preferred embodiments of the invention are set out in the dependent claims.

Preferably, a project management system runs on a server computer and application software runs on one or more client computers, connected to the server computer via a computer network. The project management system on the server computer communicates with the software application packages on the client computers via the network. The software applications may relate to pre-press, to cost estimation, etc. as discussed already above. The project management system is a communication tool that allows the different players and the software applications in the Graphic Enterprise to interact formally with each other. The different players and the software applications may be located in different companies, e.g. the project management software, running on the server computer, may be in a first company while the pre-press software and the pre-press team may be in another company.

In this document, a "topology" means a logical network of one or more server computers and one or more client computers deploying project management software (on the server computers) and client software components (on the client computers), which software is meant to work together. Different unrelated topologies may be deployed on e.g. the same Intranet.

In a method in accordance with the invention, it is preferred to use queues to transmit a message from one computer to another one. A queue is a sequence of messages or jobs held in auxiliary storage awaiting transmission or processing. In one embodiment of the invention, the sending computer and the receiving computer are both connected to a computer network and they both have an input queue and an output queue. Messages are transmitted between these queues of the computers. Advantageously, these queues are physically associated with the corresponding computers. That a computer has a queue that is physically associated with it means that the queue is coupled to the computer in such a way that the computer can keep utilizing the queue in case of a computer network failure, and preferably in case of any failure that is external to the computer. Queues that are physically associated with a specific computer are preferably realized by running the software, that implements the queues, on the specific computer itself, and by allocating the auxiliary storage, in which the sequence of messages or jobs of the queue is held, on the specific computer itself. In another, less preferred embodiment of the invention, the software implementing the queues does not run on the specific computer itself but on a computer (or data processing system) that is directly connected to the specific computer, i.e. not connected via the network, so that the specific computer can keep utilizing the queues in case of a network failure. An advantage of physically associated queues is that the computers can run independently of each other, e.g. a client computer can run and execute its jobs even if the server computer is down.

An advantage of a preferred embodiment in accordance with the invention is that new subsystems may be started up easily within an already established topology. It is not required to bring down the entire topology and to restart the topology after the installation of the new subsystem.

Another advantage is that diverse software applications, having their own proprietary interfaces, can be controlled by the project management software.

Further advantages and embodiments of the present invention will become apparent from the following description and drawings.

### BRIEF DESCRIPTION OF THE DRAWINGS

The invention is described with reference to the following drawing without the intention to limit the invention thereto, and in which:

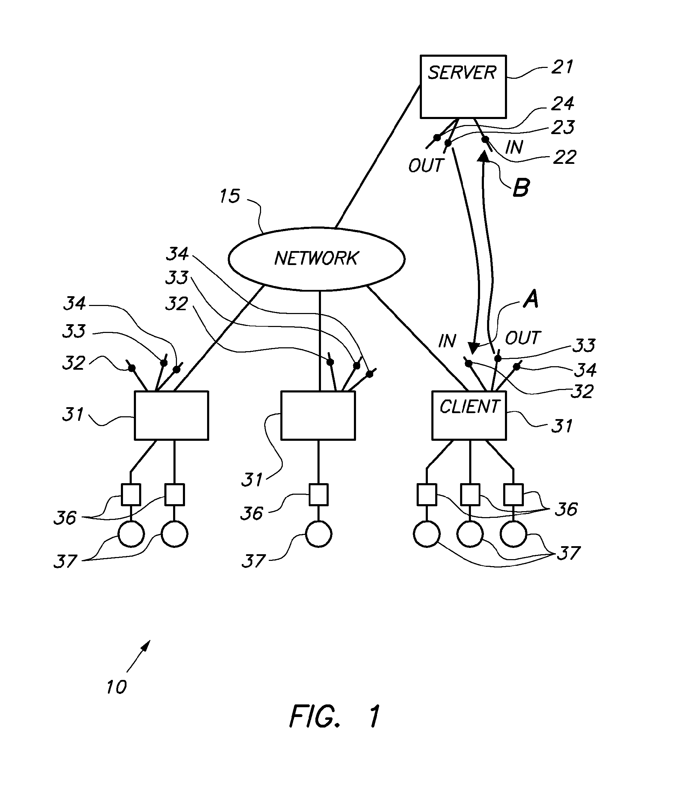

Fig. 1 diagrammatically shows an embodiment in accordance with the invention.

### DETAILED DESCRIPTION OF THE INVENTION

Fig. 1 diagrammatically illustrates a preferred embodiment of the invention. A server computer 21 and a number of client computers 31 are interconnected by a computer network 15. Project management software runs on the server computer 21 and application software components 37, also called client software components 37 or subsystems 37 elsewhere in this document, run on the client computers 31. The project management software automates the project and process management of the printing and publishing industry.

In Fig. 1, the computer network 15 is preferably the Internet or an Intranet, i.e. a portion of the Internet with restricted access. The server 21 and client 31 computers may be Personal Computers (PC's) or other types of data processing systems as known in the art. In the shown embodiment, the server computer 21 has three queues that are physically associated with it: a server input queue 22, a server output queue 23 and a server controlling queue 24. For each hardware node 31 connected to the network 15, or client computer 31, on which one or more application software components 37 will be installed, three local queues 32 - 34 are provided that are physically associated with their client computer 31: a client input queue 32, a client output queue 33 and a client controlling queue 34. When the project management software on the server computer 21 requires a client software component 37 to be run, or needs information from such a client software component 37, a message is put on the server output queue 23. This message is then got from the server output queue 23, transmitted, as indicated by arrow A on Fig. 1, via the network 15 to the destination client computer 31, and put on the client input queue 32 of the client computer 31. The original message may be removed from the server output queue 23. The message on the client input queue 32 is read by the client computer 31 and an action is performed on the client computer 31, e.g. a particular client software component 37 is run, or information is obtained from a particular client software component 37. Depending on the result of the action, a completion message, such as a message indicating that the particular client software component 37 ran and terminated successfully, is put on the client output queue 33. This completion message is got from the client output queue 33, transmitted, as indicated by arrow B on Fig. 1, via the network 15 to the server computer 21, and put on the server input queue 22. The completion message is read by the server computer 21 and may cause an action in the server computer 21.

As is illustrated in Fig. 1, several client software components 37 may run on the same client computer 31 (as a matter of fact, several software components may also run on the server computer 21). These client software components 37 often have their own proprietary interface and therefore need specific software to be controlled by the project management software on the server computer 21. This problem may be solved as follows. For each client software component 37 or subsystem 37 on a hardware node 31, a module that is called in this document a subsystem plug-in 36 (see Fig. 1) is run on the concerned hardware node 31. Such a subsystem plug-in 36 converts a message on the client input queue 32 to a format adapted for the subsystem 37 that is associated to the concerned subsystem plug-in 36 and for which the message is intended. Preferably, the subsystem plug-in 36 scans the input queue 32 of its hardware node 31, or client computer 31, for messages that are intended for its associated subsystem 37.

Usually, the format of the messages will depend on the type of subsystem 37. Preferably, the messages are XML-based (XML stands for extensible Markup Language; it is a simple and flexible text format).

In Fig. 1, only a single server computer 21 is shown. More than one server computer 21 may be used. As mentioned before, in this document, a "topology" means a logical network of one or more server computers 21 and one or more client computers 31 deploying project management software (on the server computers 21) and client software components 37 (on the client computers 31), which software is meant to work together. Different unrelated topologies may be deployed on e.g. the same Intranet.

It is preferred that a specific process, called in this document a router process or simply a router, runs on each given hardware node 21, 31. This router process moves the messages in the output queue 23, 33 of the given hardware node 21, 31 to the destination input queue 32, 22. If the destination hardware node cannot be reached, the router process takes care of retries. For example the transmission of a message as indicated by arrow A in Fig. 1 is performed by a router process running on the server computer 21, while the transmission of a message as indicated by arrow B in Fig. 1 is performed by a router process running on the client computer 31.

As a special case, a router may also redirect incoming messages from the local input queue to a remote input queue; in this way, one subsystem 37 may delegate a job to another subsystem 37.

Taking care that a message is transmitted to the correct destination is preferably done by the concerned router process. This may be carried out as follows. The router process inspects all outgoing messages on the local output queue, by looking at message header properties, and subsequently moves each outgoing message to the input queue related to the correct destination. This input queue is determined as follows. Preferably the software on the main server 21 and the subsystems 37 on the client servers 31 communicate with each other through each other's unique system names. The router then translates such a system name, that indicates the destination, e.g. a specific subsystem 37, to the corresponding input queue. This implies the need for some mechanism to get all routers informed at all times of the locations of all subsystems 37, and of the software running on the server computer 21. This mechanism includes a special router and the controlling queues 24, 34 that were mentioned already above in the embodiment shown in Fig. 1. The special router, called the bootstrap router, provides all the other routers with the information concerning the locations. The bootstrap router has the same functions as the other routers, which were already discussed above, and additionally the bootstrap router maintains the topology information of the system, i.e. where queues are provided, where routers are running, which (sub)systems run on what hardware nodes 21, 31, etc. When a new subsystem 37 is first started, a message is put on the controlling queue 34 of the hardware node 31 of this subsystem 37. The router of this hardware node 31 transmits this message to the controlling queue of the bootstrap router. The bootstrap router then updates its topology information and makes this information available to all routers in the system. The bootstrap router may run on a server computer 21 or on any other computer.

An advantage of this "bootstrapping mechanism" is that new subsystems 37 may be started up easily within an already established topology. It is not required to bring down the entire topology and to restart the topology after the installation of the new subsystem 37. Moreover, also a new client computer 31 with corresponding router and queues 32, 33, 34 can dynamically become part of an already established topology.

Another advantage is that subsystems 37 can easily "travel" to other client computers 31. It is not necessary to bring down the entire topology and to restart the topology after having moved the subsystem 37. If e.g. a given server 21 or client 31 computer fails, the software on that computer may have to be relocated to one or more other computers. The bootstrapping mechanism then takes care of informing all involved parties (e.g. all other subsystems 37) of the new locations.

Preferably only a single input queue 22, 32 is used per computer 21, 31 for all software applications that are part of the concerned topology. Thus, all client software components 37 on a specific client computer 31 make use of a single, shared input queue 32 (of course, 'all client software components' only means the client software components 37 that are part of the topology, and that thus communicate with a server computer 21 via messages; it does not include some arbitrary software that may also run on the specific client computer 31). More preferably, also a single shared output queue 23, 33 is used. Most preferably, each server computer 21 and each client computer 31 has a single set of queues associated with that computer and to be used for all software applications that are part of the concerned topology and that run on that computer. The set of queues includes a single shared input queue 22, 32, a single shared output queue 23, 33 and a single shared controlling queue 24, 34. An advantage of such a queue architecture is that it alleviates administration. Suppose that each subsystem 37 would read from its own queue instead of reading from a shared queue associated with the client computer 31 that the subsystem 37 is running on. In that case, adding a new subsystem 37 would require introducing the deployment of new, previously non-existing queues into an already up-and-running configuration.

Preferably, the queues are persistent queues; this means that their contents is preserved, even in case the computer system goes down for some reason. The subsystems 37 preferably log their results locally. Results that are needed by other subsystems 37 or by project management software on the server computer 21 are preferably put on the corresponding client output queue 33. An advantage is that the subsystems 37 can run independently of each other, even if the server computer 21 is down.

Those skilled in the art will appreciate that numerous modifications and variations may be made to the embodiments disclosed above without departing from the scope of the present invention.

### List of reference signs

- 10 :: computer network system
- 15 :: network
- 21 :: server computer
- 22 :: server input queue
- 23 :: server output queue
- 24 :: server controlling queue
- 31 :: client computer
- 32 :: client input queue
- 33 :: client output queue
- 34 :: client controlling queue
- 36 :: subsystem plug-in
- 37 :: client software component
- A :: arrow
- B :: arrow

## Claims

1. A method for maintaining a topology information of a topology of a system (10) comprising a computer network (15), a first computer (21) and a second computer (31) connected to the first computer (21) via the computer network (15), the method comprising the steps of:
- sending, to a bootstrap router for maintaining said topology information and running on said first computer (21), a first message indicating a modification of said topology of said system (10);
- receiving said first message by said bootstrap router;
- updating said topology information maintained by said bootstrap router;
- sending by said bootstrap router a second message indicating said updated topology information to a router running on said second computer (31).

2. The method according to claim 1 wherein said system (10) further comprises a plurality of computers (21, 31) connected to said computer network (15), and wherein each specific computer (21, 31) out of said plurality of computers (21, 31) has a specific router running on said specific computer (21, 31), the method further comprising the step of:
- sending said second message to each of said specific routers.

3. The method according to any one of the preceding claims wherein said system (10) further comprises a client computer (31) connected to said computer network (15) and wherein said modification of said topology of said system (10) is related to said client computer (31), the method further comprising the steps of:
- putting said first message on a client controlling queue (34) of said client computer (31);
- getting said first message from said client controlling queue (34) and putting said first message on another controlling queue (24, 34) of said first computer (21) having said bootstrap router.

4. The method according to claim 3 wherein said modification of said topology comprises the step of adding a new client software component (37) for running on said client computer (31).

5. The method according to claim 3 or claim 4 wherein said client controlling queue (34) is physically associated with said client computer (31) and wherein said other controlling queue (24, 34) is physically associated with said first computer (21).

6. The method according to any one of the preceding claims wherein said first computer (21) having said bootstrap router is a server computer (21) for running project management software for the graphical industry.

7. A computer network system (10) comprising means for carrying out the steps of the method according to any one of claims 1 to 6.

8. A set of computer programs comprising computer program code means adapted to perform the method according to any one of claims 1 to 6 when said set of computer programs is run on a computer network system (10).

9. A computer readable medium comprising program code adapted to carry out the method according to any one of claims 1 to 6 when run on a computer network system (10).

10. A method for maintaining by a server computer (21) a topology information of a topology of a system (10) comprising said server computer (21) and a client computer (31) connected to said server computer (21) via a computer network (15), the method comprising the steps of:
- receiving, by a bootstrap router for maintaining said topology information and running on said server computer (21), a first message indicating a modification of said topology of said system (10);
- updating said topology information maintained by said bootstrap router;
- sending by said bootstrap router a second message indicating said updated topology information to a router running on said client computer (31).

11. A server computer (21) comprising means for carrying out the steps of the method according to claim 10.

12. A method for maintaining a topology information of a topology of a system (10) comprising a server computer (21) and a client computer (31) connected to said server computer (21) via a computer network (15), the method comprising the following step performed on said client computer (31):
- sending a message to a bootstrap router for maintaining said topology information and running on said server computer (21), wherein said message indicates a modification of said topology of said system and wherein said modification is related to said client computer (31).

13. A client computer (31) comprising means for carrying out the steps of the method according to claim 12.

14. A computer program comprising computer program code means adapted to perform the method according to claim 10 or claim 12 when said program is run on a computer (21, 31).

15. A computer readable medium comprising program code adapted to carry out the method according to claim 10 or claim 12 when run on a computer (21, 31).
